Europäisches Patentamt

European Patent Office

Office européen des brevets

(19)

(11)  EP 1 666 322 A1

(12)  EUROPEAN PATENT APPLICATION
published in accordance with Art. 158(3) EPC

(43) Date of publication:
07.06.2006  Bulletin 2006/23

(51) Int Cl.:
*B60T 7/10* (1968.09)     *B60T 7/08* (1968.09)

(21) Application number: 04766899.1

(86) International application number:
PCT/ES2004/000360

(22) Date of filing: 04.08.2004

(87) International publication number:
WO 2005/016716 (24.02.2005 Gazette 2005/08)

(84) Designated Contracting States:
AT BE BG CH CY CZ DE DK EE ES FI FR GB GR
HU IE IT LI LU MC NL PL PT RO SE SI SK TR

(30) Priority: 11.08.2003  ES 200301914 U

(71) Applicant: Batz, S.Coop.
48140 Igorre (Bizkaia) (ES)

(72) Inventors:
• INTXAURBE IRIONDO, Jatsu
E-48142 ARTEA (Bizkaia) (ES)
• BIDAGUREN DIEGO, Inigo
E-48014 BILBO (Bizkaia) (ES)

(74) Representative: Igartua, Ismael
Apartado 213
(Dpto. Propiedad Industrial)
20500 Mondragon (Gipuzkoa) (ES)

(54)  **PARKING BRAKE LEVER WITH ADJUSTABLE RATIO**

(57)    The invention relates to a parking brake lever with an adjustable ratio. The inventive lever comprises: a lever arm (1) which terminates in a handle (2) on which an actuation force (F1) is applied, and a removable part (7) which forms a support means (3) for a flexible element (4) that is used to transmit a tensile force (F2) and which is linked to said lever arm (1) at one end thereof. Moreover, the lever arm (1) is articulated to a support of the vehicle such that it can rotate. The aforementioned support means (3) comprises a guide means (8) which is used to receive one portion of the flexible transmission element (4) and to maintain a controlled distance in each of the actuation positions of the lever arm (1). The removable part (7) can be replaced and is selected from among two or more parts having a guide means (8) that is designed to define a different ratio.

FIG. 1

EP 1 666 322 A1

**Description**

TECHNICAL FIELD

The present invention relates to a parking brake lever with an adjustable ratio of the type that comprises a lever arm with a handle to which force is applied to, said lever being mounted for pivotal movement on a support and comprising a support configuration for at least a flexible element for the transmission of traction force, joined, with the possibility of regulation, by one end of said lever.

The invention refers to a parking brake system for a vehicle, a so-called handbrake, and in particular to its parameters of cable taking up and force amplification.

PRIOR ART

A parking brake system generally comprises the following parts:

- brake lever: transforms the action of the driver on the handle into tension on the cable taking up system using a lever type mechanism;
- control cable(s): transmits the tension generated by the parking brake lever to a wheel blocking mechanism;
- wheel blocking mechanism: transforms the tension received from the control cables into a friction force on the wheel rims to be blocked.

It is usual that one vehicle model has different blocking mechanisms on the wheel, based on disc and drum brakes. Each type of braking system has their particular characteristics, i.e. a quantity of cable taken up with a certain tension to form an efficient mechanism. The force parameter is determined by the lever ratio. The ratio of the parking brake lever is expressed by the result of a division:

$$Da/Db$$

where:

- Da is the distance between the actuation point where the exerted force is carried out by the driver on the lever and the pivot axis of the lever; and
- Db is the distance between said pivot axis of the lever and the point where the outlet force of the cable taking up system is applied.

With the flexible cable systems that are known at the moment, it would be necessary to make as many handbrake lever body designs as types of blocking systems mounted in the vehicle, the result of which would be expensive due to the complexity of the body of the lever. Another option would be to fit the same handbrake for the different brake versions (disc and drum) reducing costs on the handbrake but losing efficiency on parking brake functioning, due to the different requirements of each braking system.

In systems already known, the braking body and the support are generally metallic. This produces continuous wear on metal parts thus provoking a loss of efficiency and wear and tear on the parts themselves, making it necessary to fit anti-friction parts.

From DE-A-3749018 a handbrake is known that comprises two parts joined to each side of the handbrake lever in an oscillating way with respect to the articulation point of the lever, where each of said parts offers support for the brake cable and is susceptible to being oscillated independently to modify the force applicable to each one of the cables.

DISCLOSURE OF THE INVENTION

The object of the invention is to provide a parking brake lever with an adjustable ratio that enables efficient functioning of the different braking systems that can be carried out in different vehicles through the assembly on the lever of a part selected from a set of different parts to provide different ratios with the aim of applying the lever to each one of these braking systems.

The problem to be solved is to vary the ratio of a lever with the least possible number of modifications in the parts that make up the brake set. The solution that the invention provides is to fit a cable taking up system joined to the body of the handbrake lever manufactured in a separate part from the body itself. The cable taking up system has a housing for the flexible cable that is tensed by the action of the driver on the lever. This housing for the cable can take the form of an arc with respect to the pivot axis of the lever with variable ratios in a cam profile manner, depending on the evolution of the different types of cable taking up needed in each case. Selecting the part that materialises the taking up system, the distance between the support point of the cable on the pivotal axis of the lever can be varied, which will modify the handbrake ratio as well as the quantity of cable taken up by rotating the lever, thus generating the optimal conditions for each wheel blocking system.

In this way a specific taking up cable system will be installed for each braking system, disc and drum, so that each lever together with their corresponding brake and drum system will be efficient to the maximum, as well as having overall cost reductions due to the reduced number of handbrake design modifications.

The system of the invention provides, as its principal advantage, the possibility of installing disc and drum brakes so that braking efficiency and performance force are maximised without the need for sizeable increases in manufacturing costs.

BRIEF DISCRIPTION OF THE DRAWINGS

The invention will be better understood in the light of the detailed description referred to the following drawings, where:

Fig. 1 shows a lateral perspective view of the parking brake lever with adjustable ratio according to a first embodiment of the invention.
Fig. 2 shows a schematic view that illustrates the parameters that intervene in the determination of the handbrake lever ratio.
Fig. 3 shows a raised side view of the base lever body to which one or other of the removable parts is fixed to obtain a determined ratio.
Fig. 4 shows a lateral perspective view of the assembly that includes the removable part proposed and a flexible traction cable.
Fig. 5 shows a perspective detailed view of the coupling of the removable part from Fig. 4 susceptible to providing a variable ratio to the base lever of Fig. 3;
Fig. 6 shows a lateral perspective view of the parking brake lever with an adjustable ratio in accordance with a second embodiment of this invention.
Fig. 7 shows a lateral perspective view of the removable part and the metal part of the embodiment of Fig. 6;
Fig. 8 shows a raised view of the removable part and the metal part of the embodiment of Fig. 6;
FIG. 9 shows a view according to IX-IX cross section of Fig. 8;
FIG. 10 shows a perspective view of a third embodiment of the invention; and
FIG. 11 shows a second perspective view of the embodiment of Fig. 10.

Detailed description of the invention

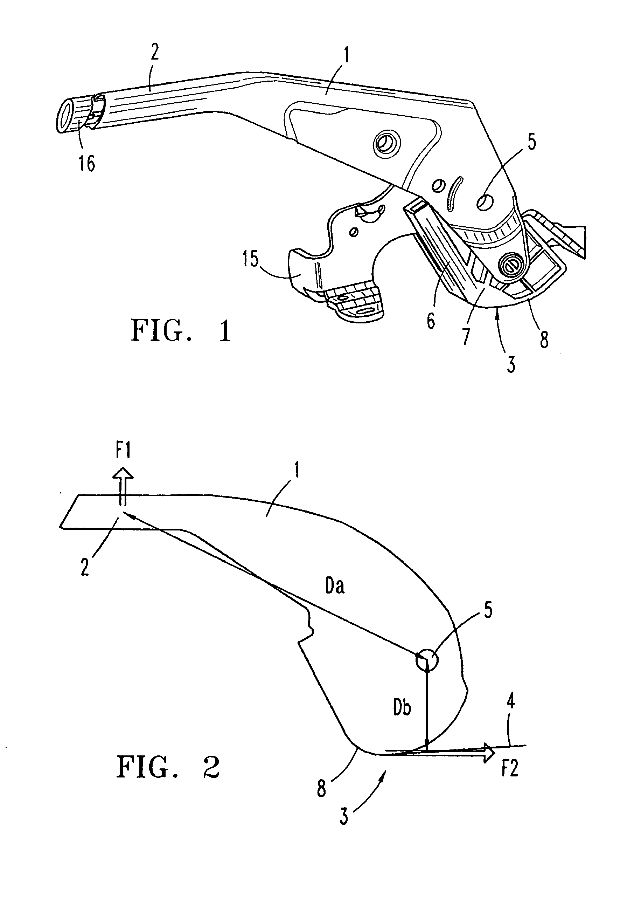

With reference first to Fig. 1, the parking brake lever with adjustable ratio in accordance with the present invention comprises a lever arm 1 with a handle 2 and articulated for pivotal movement on a support 15 by means of a pivot axis 5. The support 15 is fixed to the vehicle. At one part of the lever arm 1, opposite to the handle 2 in relation with the pivot axis 5, there is a support configuration 3 for at least one flexible traction force transmission element 4, as for example a cable (not shown in Fig. 1), which is joined at one end to said lever arm 1, and at the other to the wheel blocking system. A ratchet system (not shown) keeps the lever in an activated position and said ratchet can be freed by the user operating the push button 16 situated at the end of the lever arm 1, beside the handle 2.
Fig. 2 shows the working principles of the parking brake lever schematically. When the user applies an upward force F1 on the handle 2 of the lever arm 1, the rotation of the lever arm 1 with respect to the pivot axis 5 produces a movement of the cable 4 fixed to it, and of the support configuration 3, in the opposite direction to a force F2 exerted by the wheel blocking system. The relation between forces F1 and F2 is determined by the ratio of the lever, which is expressed as the result of a division Da/Db, where Da is the distance between the actuation point of the exerted force F1 applied to the lever arm 1 and the pivot axis 5, and Db is the distance between said pivot axis 5 and the point of support of cable traction transmission force element 4 on the support configuration 3.
On the parking brake lever in accordance with the present invention, said support configuration 3 is provided by a removable part 7, joined in a fixed manner to said lever arm 1. The support configuration 3 includes a guiding configuration 8 that facilitates the taking up of a determined part of said flexible transmission element 4 and a distance Db controlled in the different lever arm 1 actuating positions. Said removable part 7 is selected from a set of two or more removable parts 7 each one of which has a guiding configuration 8 adapted to determine a different ratio or a progression of different ratios.
The ratio provided by any of the removable parts 7, susceptible to be coupled to the lever arm 1, is constant if the guiding configuration 8 defines an arc with a constant radius with respect to the pivot axis 5 of the lever arm 1. On the contrary, if the guiding configuration 8 of any of the removable parts 7 presents curved sections with variable radius with respect to the pivot axis 5 defining a cam profile, this guiding configuration 8 will provide a progression of ratios that will increase or decrease as the lever arm 1 is rotating.

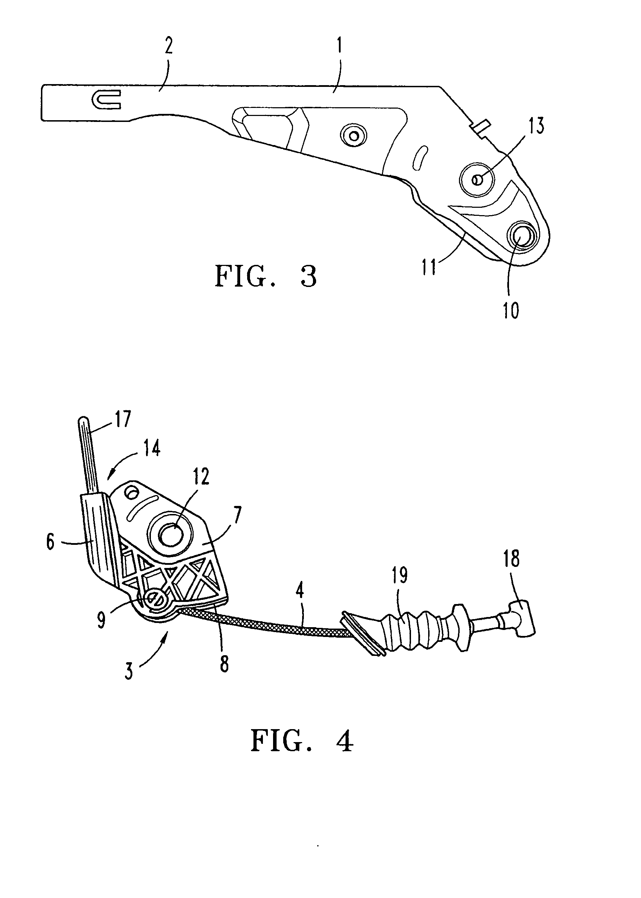

Fig. 3 shows a part that makes up the body of the lever arm 1. In the example of the embodiment shown, this part is formed by a folded and formed metal plate that defines a section of handle 2 and a pair of facing walls 11 each with pass through holes 13, mutually aligned, provided to take a bolt that materialises the pivot axis 5 of the lever arm 1. In said facing walls 11 there are also defined coaxial housings 10 in the form of ringshaped walls fitted around the respective boltholes, whose function will be described later.
Fig. 4 shows an example of the embodiment of one of the removable parts 7 susceptible to be fitted on the lever arm of Fig. 3 , which is preferably manufactured from a material with a low friction coefficient, as for example a plastic material and obtained by moulding. Removable part 7 has two coaxial protuberances 9 provided to fit into the coaxial housings 10 of the facing wall 11 of the lever arm 1. The removable part 7 also comprises a bolthole 12 coinciding with the holes 13 of said facing walls 11, so that the mentioned bolt that materialises the pivot axis 5 also crosses the removable part 7. With this, two anchoring points are provided for the fixed coupling of the mentioned removable part 7 in the lever arm 1. For example in the facing walls 11 there can be one or more facing holes coinciding with the corresponding boltholes of the removable part 7 to receive one or more fastening bolts as substitutes or as well as the means described with reference to Figs. 3 and 4.

Although the end of the stated cable element 4 corresponding to the lever could be directly fixed to the metal body of the lever arm 1, as an added advantage said removable part 7 includes a holding configuration 6 to hold said end of flexible element 4. The holding configuration 6 includes a housing with a stop for a tensing device 14 joined to the end of cable element 4, like a threaded rod 17 with a nut (not visible in Fig. 4) coupled to the same. The opposite end of the cable could be tipped with an anchoring element 18 and a flexible protection sleeve 19 could be placed around the cable to be fitted in the assembly so as to protect the mechanism.

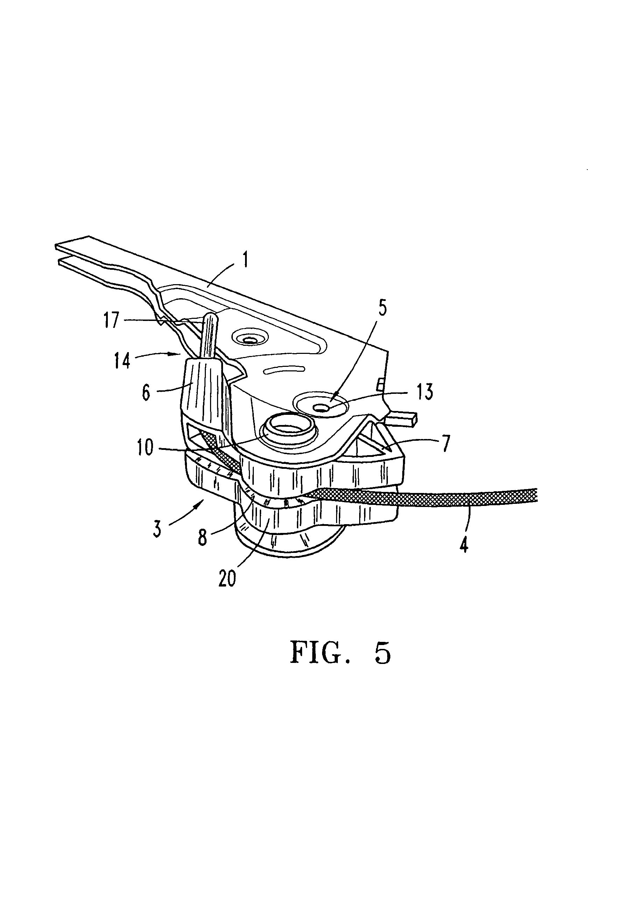

Fig. 5 shows in detail the removable part 7, coupled to the lever arm 1. The guiding configuration 8 is formed by a groove, the bottom of which constitutes the support configuration 3 on which the cable transmission element or cable 4 makes contact. Said grooves are lead to an inferior opening in the housing that the holding configuration 6 forms, within which the mentioned stop is available for the tensing element 14. In the example of the embodiment shown, at both sides of groove 8 lugs 20 jut out, acting as support to the mentioned protuberances 9, which permit a greater distance between the support configurations 3 and the pivot axis 5 and a greater ratio. If the removable part 7 were adapted to provide a lesser ratio, the distance between the support configuration 3 and the pivot axis 5 would be greater and the 20 lugs would probably not be necessary.

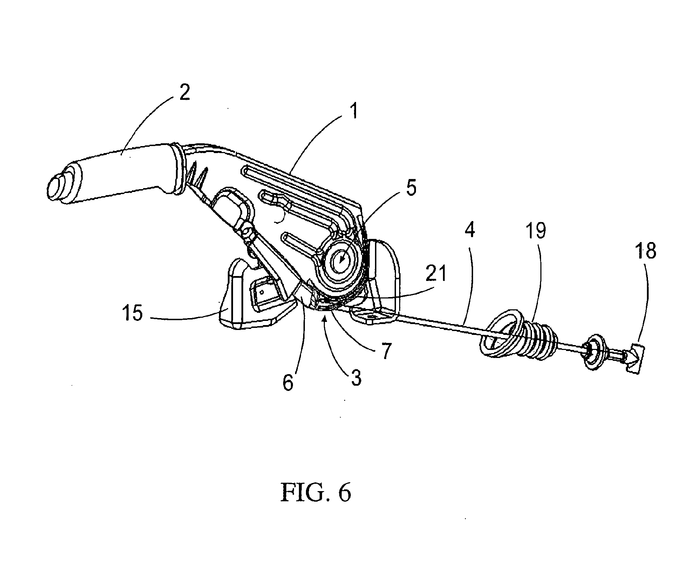

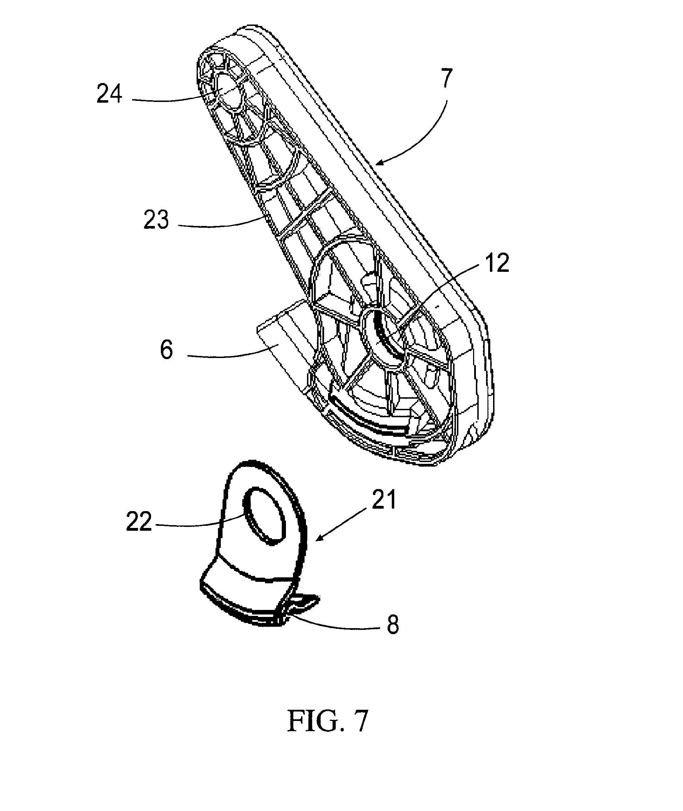

Fig. 6 shows a second embodiment of the invention. The working principle of the brake lever of this second embodiment is the same as that of the embodiment already described, as well as the way in which the different parts of the mentioned brake lever cooperate. In this second embodiment, the removable part is obtained by moulding and comprises a metal part 21, shown in Fig. 7. The flexible transmission element 4 instead of leaning on the removable part 7 leans on said metal part 21.

As can be observed in Fig. 7, the removable part 7 comprises a bolthole 12 coinciding with the boltholes 13 of the lever arm 1 prepared for the bolt that materialises the pivot axis 5 of the lever arm 1 to pass through. The metal part 1 also comprises a bolthole 22 coinciding with bolthole 12 of the removable part 7 of the bolthole 13 of lever arm 1.

The metal part 21 is, in this embodiment, a substantially L-shaped plate, one of its sides comprising a bolthole 12 and the other of its sides comprising the guiding configuration 8 of the support configuration 3.

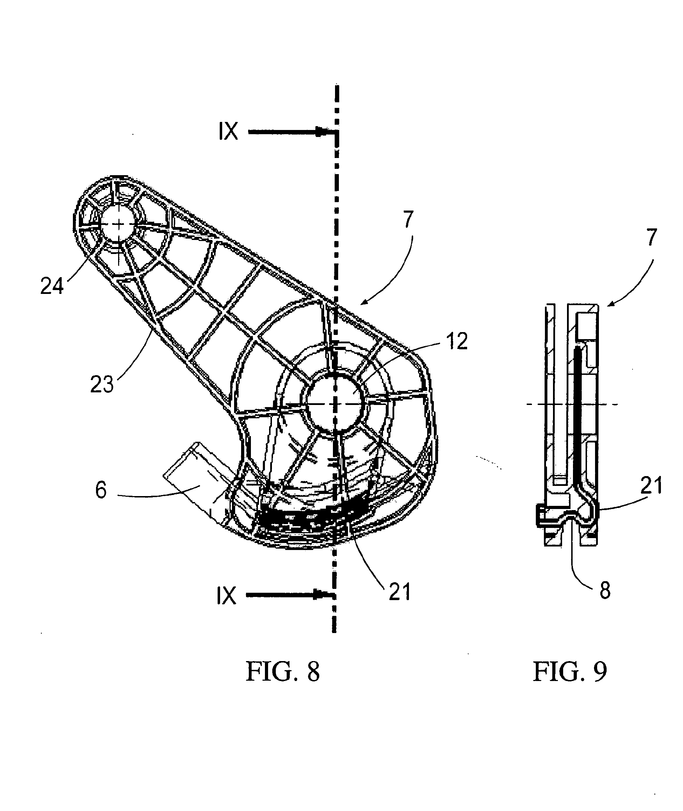

Figs. 8 and 9 show the way in which the metal part 21 remains fitted into removable part 7. It is preferable that removable part 7 is fixed to metal part 21 by overmoulding, although there are other alternatives such as the insertion of said metal part 21 into the housing available in the removable part 7 once this has been moulded.

Removable part 7 comprises a prolongation 23 provided to house itself in the inside of the lever arm 1. In prolongation 23 a second bolthole 24 is available near the end of said prolongation 23, said second bolthole 24 being designed to be passed through by the fixing means (not shown in the drawings) available in said lever arm 1. Said fixing means can comprise for example coaxial protuberances available on the internal sides of lever arm 1 or a coupling pin that crosses said lever arm 1.

In these two embodiments it is not necessary to fit anti-friction systems in the lever arm 1 or the support 15, given that both parts, which are metal, are separated by a removable part 7, which is a piece of plastic like Delrin Acetal or POM, which avoids friction between the metal parts.

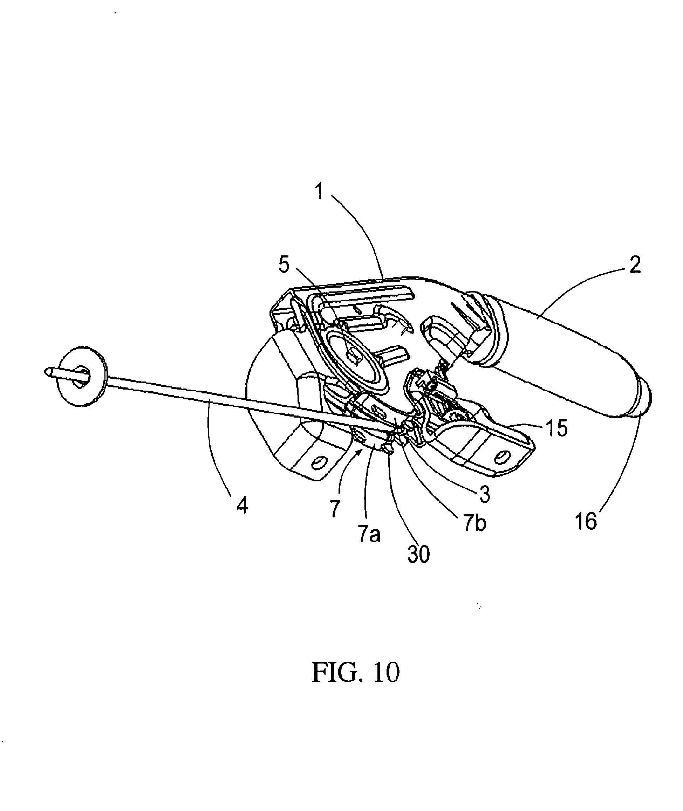

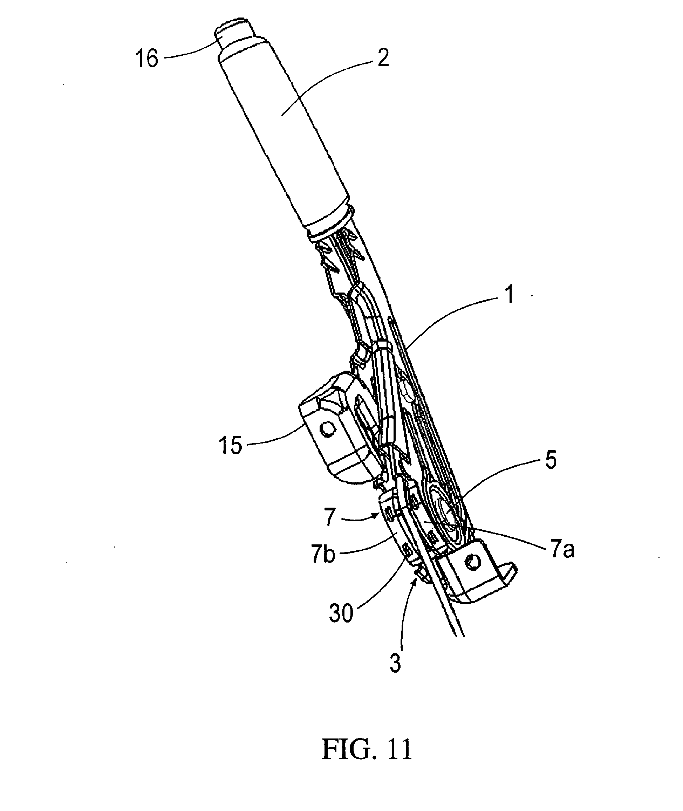

In the Figs. 10 and 11 a third embodiment of the invention is shown. In said embodiment, the removable part 7 is a metal plate comprising, at both sides of the support configuration 3, tabs 7a and 7b that are fixed to facing walls 11 of the lever arm 1. Said facing walls 11 comprise projections 30 that are housed in their respective holes arranged on tabs 7a and 7b, then doubling said projections 30 on the removable part 7, with said removable part 7 remaining fixed to the lever arm 1.

The embodiments disclosed herein are merely illustrative, it will be apparent to those skilled in the art that modifications and changes may be made to the examples of the embodiments described without departing from the scope of the present invention which is defined in the following claims.

**Claims**

1. Parking brake lever with adjustable ratio, of the type that comprises a lever arm with a handle (2) where an actuating force (F1) is applied, said lever arm (1) pivoting around a support and comprising a support configuration (3) for at least a flexible element (4) for transmission of a traction force (F2), joined at one end to said lever arm (1), determining a ratio of the lever expressed by the result of a division Da/Db between the distance (Da) between the actuation point of said actuating force on the lever arm (1) and the pivot axis (5), and the distance (Db) between said pivot axis (5) and the support point of said flexible transmission element (4) on said support configuration (3), **characterised in that** said support configuration (3) is provided by a removable part (7) joined in a fixed way to said lever arm (1), said support configuration (3) comprising a guiding configuration (8) that facilitates the taking up of a certain portion of said flexible transmission element (4), that is at least one, and a distance (Db) controlled at each one of the actuating positions of the lever arm (1), said removable part (7) being selected among two or more parts, each one having a guiding configuration (8) adapted to determine a different ratio or a progression of different ratios.

**2.** Lever according to claim 1, **characterised in that** said removable part (7) includes a holding configuration (6) to hold the end of said flexible element (4).

**3.** Lever according to claim 1, **characterised in that** said removable part (7) comprises a bolthole (12) that coincides with boltholes (13) of the arm lever (1) arranged for a bolt that materialises the pivot axis (5) of the lever arm (1) to pass through.

**4.** Lever according to claim 1, **characterised in that** the guiding configuration (8) of each one of the removable parts (7) susceptible to be coupled to the lever arm (1) defines an arc with a constant radius with respect to the pivot axis (5) of the lever arm (1).

**5.** Lever according to claim 1, **characterised in that** the guiding configuration (8) of each one of the removable parts (7) susceptible to be coupled to the lever arm (1) present curved sections of variable radius with respect to the pivot axis (5) of the lever arm (1) defining a cam profile.

**6.** Lever according to claim 1, **characterised in that** the removable part (7) comprises two coaxial protuberances (9) arranged to fit in coaxial housings (10) arranged in the facing walls (11) of the lever arm (1), and the removable part (7) comprises a bolthole (12) coinciding with the boltholes (13) of said facing walls (11) arranged so that the bolt passes through, providing two anchoring points for the fixed coupling of said removable part (7) on the lever arm (1).

**7.** Lever according to claim 6, **characterised in that** said bolt materialises the pivot axis (5) of the lever arm (1) with respect to the support.

**8.** Lever according to claim 6, **characterised in that** the removable part (7) is manufactured in a material with a low friction coefficient and obtained by moulding.

**9.** Lever according to claim 2, **characterised in that** said holding configuration (6) includes a housing with a stop for a tensing device (14) joined to the end of the flexible element (4).

**10.** Lever according to claim 1, **characterised in that** said removable part (7) is obtained by moulding and comprises a metal part (21) with the flexible transmission element (4) resting, at least partially, on said metal part (21).

**11.** Lever according to claim 1, **characterised in that** the removable part (7) comprises a bolthole (12) coinciding with the boltholes (13) of the lever arm (1) arranged to be passed through by the bolt that materialises the pivot axis (5) of the lever arm (1), and the metal part (21) also comprises a bolthole (22) coinciding with the bolthole (12) of the removable part (7) and the boltholes (13) of the lever arm (1).

**12.** Lever according to claim 1, **characterised in that** the metal part (21) is a substantially L-shaped plate, one of its sides comprising the bolthole (12) and the other of its sides comprising the guiding configuration (8) of the support configuration (3).

**13.** Lever according to any of the claims 10 to 12, **characterised in that** the removable part (7) is fixed by overmoulding onto the metal part (21).

**14.** Lever according to any of the claims 11 to 13, **characterised in that** the removable part (7) comprises a prolongation (23) arranged to house in the inside of the lever arm (1) that comprises a second bolthole (24) near to its end, said second bolthole (24) being arranged to be passed through by coupling means placed in said lever arm (1).

**15.** Lever according to claim 1, **characterised in that** the removable part (7) is a metal part that comprises the support configuration (3).

**16.** Lever according to claim 15, **characterised in that** the removable part (7) comprises, at both sides of the support configuration (3), tabs (7a,7b) that are fixed to facing walls (11) of the lever arm (1).

FIG. 1

FIG. 2

FIG. 3

FIG. 4

FIG. 5

FIG. 6

FIG. 7

IX

24

23

6

7

12

21

IX

**FIG. 8**

7

21

8

**FIG. 9**

FIG. 10

FIG. 11

## INTERNATIONAL SEARCH REPORT

| | International application No. |
|---|---|
| | PCT/ ES 2004/000360 |

**A. CLASSIFICATION OF SUBJECT MATTER**

IPC7 B60T7/10, 7/08

According to International Patent Classification (IPC) or to both national classification and IPC

**B. FIELDS SEARCHED**

Minimum documentation searched (classification system followed by classification symbols)

IPC7 B60T7+

Documentation searched other than minimum documentation to the extent that such documents are included in the fields searched

Electronic data base consulted during the international search (name of data base and, where practicable, search terms used)

CIBEPAT,EPODOC

**C. DOCUMENTS CONSIDERED TO BE RELEVANT**

| Category* | Citation of document, with indication, where appropriate, of the relevant passages | Relevant to claim No. |
|---|---|---|
| X<br>Y | US 5280734 A (RIFFLE et al.) 25.01.1994, column 2, line 57 - column 3, line 59; figures | 1-8<br>9-11, 15 |
| Y | EP 1258405 A (KUROISHI IRON WORKS) 20.11.2002, column 5, lines 2-18; figures 1,2 | 9 |
| Y | GB 1183117 A (MULTI-STROKE HANDBRAKE CONTROLS) 04.03.1970, column 6, lines 48-65; figures 1,3 | 10, 11 |
| Y | US 2003015380 A (SYKES et. al) 23.01.2003, page 4, paragraphs [0043]-[0044]; figures 2, 6, 10 | 15 |
| A | US 6363811 B (SALDAÑA) 02.04.2002, column 1, lines 11-52; figures 1, 2, 10 | 1-3, 5, 9 |
| A | US 3136177 A (RUSSELL et al.) 09.06.1964, whole document | 1, 2, 4, 9, 15 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 October 2004 (28.10.04) | 05 November 2004 (05.11.04) |

| Name and mailing address of the ISA/<br><br>S.P.T.O. | Authorized officer |
|---|---|
| Facsimile No. | Telephone No. |

Form PCT/ISA/210 (second sheet) (July 1992)

**INTERNATIONAL SEARCH REPORT**
Information on patent family members

International Application No

PCT/ ES 2004/000360

| Patent document cited in search report | Publication date | Patent familiy member(s) | Publication date |
|---|---|---|---|
| US 5280734 A | 25.01.1994 | NONE | ----------- |
| EP 1258405 A | 20.11.2002 | JP 2001233188 A<br>CA 2401074 A<br>WO 0162565 A<br>EP 20010902715<br>US 2003010149 A | 28.08.2001<br>30.08.2001<br>30.08.2001<br>31.01.2001<br>16.01.2003 |
| GB 1183117 A | 04.03.1970 | NL 6813378 A | 21.03.1969 |
| US 2003015380 A | 23.01.2003 | US 2004074331 A | 22.04.2004<br>22.04.2004<br>22.04.2004 |
| US 6363811 B | 02.04.2002 | NONE | ----------- |
| US 3136177 A | 09.06.1964 | NONE | ----------- |

Form PCT/ISA/210 (patent family annex) (July 1992)